(19) Europäisches Patentamt / European Patent Office / Office européen des brevets

(11) **EP 4 137 278 A1**

(12) **EUROPEAN PATENT APPLICATION**
published in accordance with Art. 153(4) EPC

(43) Date of publication:
**22.02.2023 Bulletin 2023/08**

(21) Application number: **20938229.0**

(22) Date of filing: **28.05.2020**

(51) International Patent Classification (IPC):
**B25J 9/16** (2006.01)    **B25J 19/00** (2006.01)

(52) Cooperative Patent Classification (CPC):
**B25J 9/16; B25J 19/00**

(86) International application number:
**PCT/CN2020/093045**

(87) International publication number:
**WO 2021/237620 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Ltd., China**
**Chaoyang District**
**Beijing 100102 (CN)**

(72) Inventors:
• **HUA, Tao**
**Shanghai 200129 (CN)**

• **XI, Baoshi**
**Harbin, Heilongjiang 150001 (CN)**
• **LI, Hao**
**Shanghai 201204 (CN)**
• **WU, Jianqiang**
**Shanghai 200120 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **METHOD, DEVICE AND SYSTEM FOR CALIBRATING TOOL CENTER POINT OF ROBOT**

(57)    A method for calibrating a tool center point of a robot (100), which utilizes a laser sensor (300) comprising a laser beam (310), and comprises the following steps: assuming a virtual laser beam (320) for the laser sensor (300), so that the virtual laser beam (320) is perpendicular to and intersects the laser beam (310); controlling the robot (100) to move by a first motion trajectory (T1), wherein the first motion trajectory (T1) and the laser beam (310) have a first intersection (PP1) and a second intersection (PP2); a second motion trajectory (T2) and the laser beam (310) have a third intersection (PP3) and a fourth intersection (PP4); respectively reversely rotating the third intersection (PP3) and the fourth intersection (PP4) to obtain a virtual third intersection (PP3') and a virtual fourth intersection (PP4'), and obtaining a first center point (PT1) on the basis of the first intersection (PP1), the second intersection (PP2), the virtual third intersection (PP3'), and the virtual fourth intersection (PP4'); and continuing executing the steps iteratively to obtain a third center point (PT3), and controlling the robot (100) to move to the third center point (PT3) and continue moving along the laser beam (310) in the z axis. The costs are greatly reduced.

Fig. 3

## Description

## Technical Field

The present invention relates to the field of robots, in particular to a method, device and system for calibrating a tool center point of a robot.

## Background Art

With the development of robot technology, more and more robots are used in industrial applications, such as automatic loading and unloading, welding, stamping, spraying, and manipulations. Tool center point (TCP) accuracy is very important for these robot applications. However, accuracy of tool center point calculation by a traditional method, that is, manually, is not sufficient. In addition, a robot collision error caused by tool deformation or misoperation in routine application leads to a deviation between a tool center point and the actual tool position, which will eventually result in deviations from all target positions.

In order to obtain an accurate position of a tool center point, some suppliers provide a 3D tool center point laser test sensor, which simultaneously uses two laser beams to correct positions on the X-axis and Y-axis. When the laser is not blocked, output produced by such a laser test sensor is very low.

A robot tool moves in the center of the laser test sensor along a predetermined route. Programming code records robot positions at each edge of the sensor output. After the robot finishes following the predetermined route, all recorded robot positions will be used to calculate the x, y, z, rx, ry of the new tool center point of a robot position. This method allows effective correction of positions of tool center points when the tool center points are axisymmetric. However, this method requires the use of a very expensive laser test sensor, so its application is limited.

## Summary of the Invention

A first aspect of the present invention provides a method for calibrating a tool center point of a robot, which utilizes a laser sensor comprising a laser beam, and comprises the following steps: S1, assuming a virtual laser beam for the laser sensor, so that the virtual laser beam is perpendicular to and intersects the laser beam, and the plane formed by the laser beam and the virtual laser beam is parallel to the plane formed by the X-axis, Y-axis, and origin of the base coordinates of the robot; S2, controlling the robot to move by a first motion trajectory, wherein the first motion trajectory and the laser beam have a first intersection and a second intersection, rotating the first motion trajectory by 90 degrees clockwise or counterclockwise to obtain a second motion trajectory, and controlling the robot to move by the second motion trajectory, wherein the second motion trajectory and the laser beam have a third intersection and a fourth intersection; S3, respectively reversely rotating the third intersection and the fourth intersection by 90 degrees to obtain a virtual third intersection and a virtual fourth intersection, obtaining a first center point on the basis of the first intersection, the second intersection, the virtual third intersection, and the virtual fourth intersection, and, after moving the robot over a first distance in the Z-axis direction of the base coordinates thereof, continuing executing steps S2 and S3 iteratively to obtain a second center point, the first center point and the second center point determining a calibration line, wherein in order to rotate the calibration line to be parallel to the Z-axis, it is necessary to rotate it by a first angle in the X-axis direction and by a second angle in the Y-axis direction, respectively, controlling the robot to rotate by the first angle relative to the X-axis and by the second angle relative to the Y-axis, respectively; continuing executing steps S2 and S3 iteratively to obtain a third center point, controlling the robot to move to the third center point and continue moving along the laser beam in the Z-axis direction close to the laser beam, wherein the point shown on the output produced by the laser sensor at which contact between the laser beam and the robot is just avoided is the calibrated tool center point of the robot.

Furthermore, it further comprises the step of calculating the slope of the laser beam relative to the base coordinates of the robot to determine the slope value range of the virtual laser coordinate.

Furthermore, step S1 further comprises the following steps: S11, controlling the robot to follow a motion trajectory so that the motion trajectory and the laser beam have two intersections, selecting a point between the two intersections of the laser beam as the intersection of the laser beam and the virtual laser beam, so as to assume a virtual laser beam for the laser sensor, and, on the basis of the intersection, making the virtual laser beam perpendicular to and intersect the laser beam; S12, by taking the normal vector of the plane formed by the laser beam and the virtual laser beam as the rotation axis, rotating the virtual laser beam until the plane formed by the laser beam and the virtual laser beam is parallel to the plane formed by the X-axis, Y-axis, and origin of the base coordinates of the robot.

Furthermore, the rotation axis in step S2 and step S3 is the normal vector of the plane formed by the laser beam and the virtual laser beam.

Furthermore, a tool center point deviation of a calibrated tool center point of a robot from the initial center point thereof is calculated, wherein the tool center point deviation comprises:

- the difference between the initial tool center point of the robot and the calibrated tool center point on the X-axis;
- the difference between the initial tool center point of the robot and the calibrated tool center point on the Y-axis;
- the difference between the initial tool center point of the robot and the calibrated tool center point on the Z-axis;

- the first angle RX;
- the second angle RY.

A second aspect of the present invention provides a system for calibrating a tool center point of a robot, which utilizes a laser sensor comprising a laser beam, the system for calibrating a tool center point of a robot comprising: a processor; and a memory coupled to the processor, the memory having an instruction stored therein that, when executed by a processor, causes the electronic device to perform an action comprising: S1, assuming a virtual laser beam for the laser sensor, so that the virtual laser beam is perpendicular to and intersects the laser beam, and the plane formed by the laser beam and the virtual laser beam is parallel to the plane formed by the X-axis, Y-axis, and origin of the base coordinates of the robot; S2, controlling the robot to move by a first motion trajectory, wherein the first motion trajectory and the laser beam have a first intersection and a second intersection, rotating the first motion trajectory by 90 degrees clockwise or counterclockwise to obtain a second motion trajectory, and controlling the robot to move by the second motion trajectory, wherein the second motion trajectory and the laser beam have a third intersection and a fourth intersection; S3, respectively reversely rotating the third intersection and the fourth intersection by 90 degrees to obtain a virtual third intersection and a virtual fourth intersection, obtaining a first center point on the basis of the first intersection, the second intersection, the virtual third intersection, and the virtual fourth intersection, and, after moving the robot over a first distance in the Z-axis direction of the base coordinates thereof, continuing executing actions S2 and S3 iteratively to obtain a second center point, the first center point and the second center point determining a calibration line, wherein in order to rotate the calibration line to be parallel to the Z-axis, it is necessary to rotate it by a first angle in the X-axis direction and by a second angle in the Y-axis direction, respectively, controlling the robot to rotate by the first angle relative to the X-axis and by the second angle relative to the Y-axis, respectively; continuing executing actions S2 and S3 iteratively to obtain a third center point, controlling the robot to move to the third center point and continue moving along the laser beam in the Z-axis direction close to the laser beam, wherein the point shown on the output produced by the laser sensor at which contact between the laser beam and the robot is just avoided is the calibrated tool center point of the robot.

Furthermore, it further comprises the following actions: calculating the slope of the laser beam relative to the base coordinates of the robot, so as to determine the slope value range of the virtual laser coordinate.

Furthermore, the action S1 further comprises: S11, controlling the robot to follow a motion trajectory so that the motion trajectory and the laser beam have two intersections, selecting a point between the two intersections of the laser beam as the intersection of the laser beam and the virtual laser beam, so as to assume a virtual laser beam for the laser sensor, and, on the basis of the intersection, making the virtual laser beam perpendicular to and intersect the laser beam; S12, by taking the normal vector of the plane formed by the laser beam and the virtual laser beam as the rotation axis, rotating the virtual laser beam until the plane formed by the laser beam and the virtual laser beam is parallel to the plane formed by the X-axis, Y-axis, and origin of the base coordinates of the robot.

Furthermore, the rotation axis in action S2 and action S3 is the normal vector of the plane formed by the laser beam and the virtual laser beam.

Furthermore, a tool center point deviation of a calibrated tool center point of a robot from the initial center point thereof is calculated, wherein the tool center point deviation comprises:

- the difference between the initial tool center point of the robot and the calibrated tool center point on the X-axis;
- the difference between the initial tool center point of the robot and the calibrated tool center point on the Y-axis;
- the difference between the initial tool center point of the robot and the calibrated tool center point on the Z-axis;
- the first angle RX;
- the second angle RY.

A third aspect of the present invention provides a device for calibrating a tool center point of a robot, which utilizes a laser sensor comprising a laser beam, the device for calibrating a tool center point of a robot comprising: a first virtualization apparatus for assuming a virtual laser beam for the laser sensor, so that the virtual laser beam is perpendicular to and intersects the laser beam, and the plane formed by the laser beam and the virtual laser beam is parallel to the plane formed by the X-axis, Y-axis, and origin of the base coordinates of the robot; a control apparatus for controlling the robot to move by a first motion trajectory, wherein the first motion trajectory and the laser beam have a first intersection and a second intersection, rotating the first motion trajectory by 90 degrees clockwise or counterclockwise to obtain a second motion trajectory, and controlling the robot to move by the second motion trajectory, wherein the second motion trajectory and the laser beam have a third intersection and a fourth intersection; a second virtualization apparatus for respectively reversely rotating the third intersection and the fourth intersection by 90 degrees to obtain a virtual third intersection and a virtual fourth intersection, obtaining a first center point on the basis of the first intersection, the second intersection, the virtual third intersection, and the virtual fourth intersection, and, after moving the robot over a first distance in the Z-axis direction of the base coordinates thereof, continuing executing actions S2 and S3 iteratively to obtain a second center point, the first center point and the second center point determining a calibration line, wherein in order to rotate the calibration line to be parallel to the Z-axis, it is necessary to rotate it by a first angle in the X-axis direction and by a second angle in the Y-axis direction, respectively, controlling the robot to rotate by the first angle relative to the X-axis and by the second angle relative to the Y-axis, respectively; the control apparatus and the second virtualization apparatus continue executing the above-described functions iteratively to obtain a third center point, controlling the robot to move to the third center point and continue moving along the laser beam in the Z-axis direction close to the laser beam, wherein the point shown on the output produced by the laser sensor at which contact between the laser beam and the robot is just avoided is the calibrated tool center point of the robot.

A fourth aspect of the present invention provides a computer program product tangibly stored on a computer-readable medium and comprising a computer-executable instruction that, when executed, causes at least one processor to implement the method as described in the first aspect of the present invention.

A fifth aspect of the present invention provides a computer-readable medium having a computer-executable instruction stored thereon that, when executed, causes at least one processor to implement the method as described in the first aspect of the present invention.

With a method for calibrating a tool center point of a robot provided by the present invention, a laser sensor with only one laser beam is utilized to simulate a laser sensor with two laser beams, so the costs are greatly reduced.

**Brief Description of the Drawings**

Fig. 1 is a system architecture diagram of a method for calibrating a tool center point of a robot according to a specific embodiment of the present invention;
Fig. 2A is a schematic diagram of determining the position of a virtual laser beam by a method for calibrating a tool center point of a robot according to a specific embodiment of the present invention;
Fig. 2B is a schematic diagram of determining the position of a virtual laser beam by a method for calibrating a tool center point of a robot according to a specific embodiment of the present invention;
Fig. 3 is a schematic diagram of calibrating a tool center point by a motion trajectory of a robot according to a specific embodiment of the present invention.

**Specific Embodiments**

Specific embodiments of the present invention will be described below in conjunction with the drawings.

The present invention provides a method for calibrating a tool center point of an axisymmetric robot by using a one-dimensional laser sensor. The one-dimensional laser sensor refers to a sensor with one laser beam. In the present invention, an additional virtual laser beam is assumed, the end effector of a robot is instructed to perform a series of actions in the laser beam, and a trajectory of its application is analyzed in combination with an algorithm to calibrate a tool center point.

Since devices, tools or apparatuses vary in dimensions, types and shapes, it is necessary to select a point that represents a whole device, tool or apparatus, which is a tool center point. In general, a tool center point in the initial state is the origin of the coordinate system of a tool. A motion trajectory is planned for a robot, in essence, to bring its tool center point close to a number of points in space, so a motion trajectory of a robot is motions of a tool center point.

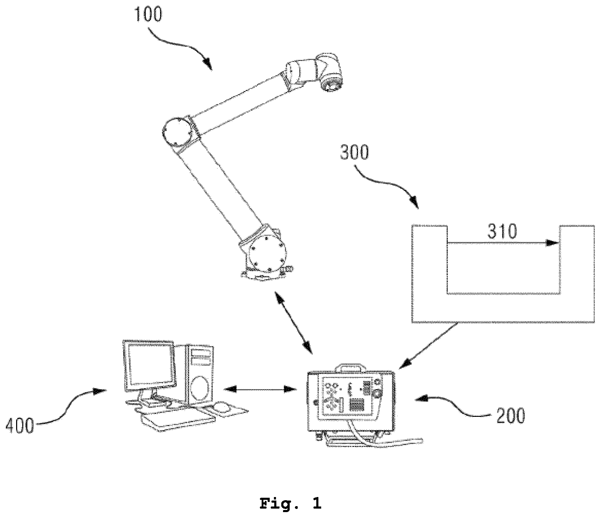

Fig. 1 is a system architecture diagram of a method for calibrating a tool center point of a robot according to a specific embodiment of the present invention, and, as shown in Fig. 1, in this embodiment, the robot 100 is a robotic arm, the robot 100 is connected to a robot controller 200, and the robot controller 200 is connected to a laser sensor 300 and a computer 400, respectively. The laser sensor 300 has a laser beam. Optionally, a calculation program is installed in the computer 400 to control the robot controller 200 to calibrate a tool center point of the robot 100, or a calculation program is directly installed in the robot controller 200 to calibrate a tool center point of the robot 100. In addition, output of the laser sensor 300 may be directly connected to the robot controller 200.

A first aspect of the present invention provides a method for calibrating a tool center point of a robot, which utilizes a laser sensor 300 comprising a laser beam 310, and comprises the following steps:
First, step S1 is performed to assume a virtual laser beam 320 for the laser sensor, so that the virtual laser beam 320 is perpendicular to and intersects the laser beam 310, and the plane formed by the laser beam 310 and the virtual laser beam 329 is parallel to the plane formed by the X-axis, Y-axis, and origin of the base coordinates of the robot.

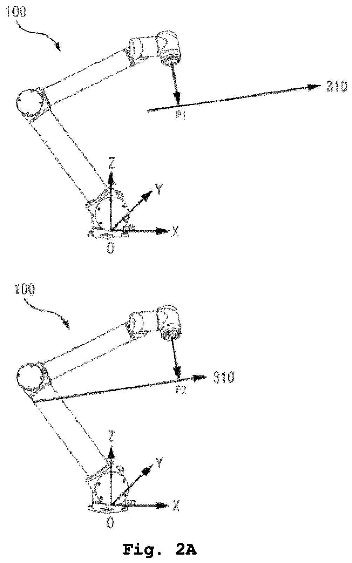

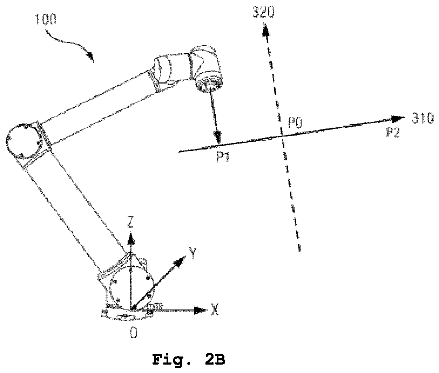

In a preferred embodiment, as shown in Fig. 2, the robot 100 moves from one point P1 on the laser beam 310 to another point P2 on the laser beam 310 on the basis of the current tool center point, wherein the posture of the robot 100 remains unchanged during the above-described process. In addition, the motion trajectory followed the robot 100 when moving from point P1 to point P2 may be rotational. A point P0 is randomly selected as the intersection on the laser beam 310 between points p1 and p2 to assume another virtual laser beam 320 intersecting the laser beam 310. It should be noted that the virtual laser beam 320 is imaginary, wherein the virtual laser beam 320 is provided with a spatial position and assumed to exist near the laser beam 310.

The step S1 comprises substep S11 and substep S12.

In substep S11, the robot 100 is controlled to follow a motion trajectory so that the motion trajectory and the laser beam have two intersections P1 and P2, a point P0 is selected between the two intersections P1 and P2 of the laser beam as the intersection of the laser beam 310 and the virtual laser beam 320, so as to assume a virtual laser beam 320 for the laser sensor 300, and, on the basis of the intersection P0, make the virtual laser beam 320 perpendicular to and intersect the laser beam 310.

Specifically, as shown in Fig. 2, the motion trajectory is followed by the robot 100 from point P1 to point P2. On the basis of the base coordinates of the robot 100, in this embodiment, an axis is set as a parameter, for example, $z = k1$, and the robot 100 is moved so that its initial tool center point comes into contact with point P1 on the laser beam 310. Then, in this embodiment, the same axis is set as a parameter, for example, $z = k2$, and the robot 100 is moved so that its initial tool center point comes into contact with point P2 of the laser beam 310. On the basis of the positions P1 ($x_{p1}$, $y_{p1}$, k1) and P2 ($x_{p2}$, $y_{p2}$, k2), the direction of the laser beam 310 may be calculated. The basic idea behind the present invention is the use of a laser sensor 300 with only one laser beam to simulate a laser sensor with two laser beams.

In substep S12, by taking the normal vector (not shown) of the plane formed by the laser beam 310 and the virtual laser beam 320 as the rotation axis, the virtual laser beam 320 is rotated until the plane formed by the laser beam 310 and the virtual laser beam 320 is parallel to the plane XOY formed by the X-axis, Y-axis, and origin of the base coordinates of the robot.

Wide choices are available about the virtual laser beam 320. The virtual laser beam 320 is simulated by a motion trajectory of the robot 100, wherein any point on the laser beam 310 is selected to simulate the virtual laser beam 320, so that the laser beam 310 and the virtual laser beam 320 have an intersection P0. Then, a rotation axis needs to be set, which is preferably the normal vector of the plane formed by the laser beam 310 and the virtual laser beam 320. The normal vector of a plane is the vector represented by a line perpendicular to the plane.

Preferably, the intersection P0 is the center point of P1 and P2, which is the point of rotation, so the center point P0 is expressed as ( $\frac{x_{p1}+x_{p2}}{2}, \frac{y_{p1}+y_{p2}}{2}, \frac{k1+k2}{2}$ ). The direction of the virtual laser beam 320 is parallel to the XOY plane of the base coordinates of the robot 100, the XOY plane being formed by the X-axis, Y-axis, and origin of the base coordinates of the robot 100. Furthermore, the virtual laser beam 320 is perpendicular to the laser beam 310. As shown in Fig. 2B, the base coordinates of the robot 100 are represented as origin 0, X-axis, Y-axis, and Z-axis.

The axial direction of the laser beam 310 may be expressed as ($x_{p2}$-$x_{p1}$, $y_{p2}$-$y_{p1}$, k2-k1), and the axial direction of virtual laser beam 320 may be expressed as ($y_{p1}$-$y_{p2}$,$x_{p2}$-$x_{p1}$,0), so the plane formed by laser beam 310 and the virtual laser beam 320 may be expressed as ($x_{p2}$-$x_{p1}$,$y_{p2}$-$y_{p1}$,k2-k1)$\times$($y_{p1}$-$y_{p2}$,$x_{p2}$-$x_{p1}$,0).

In fact, since the laser sensor 300 is fixed, the laser beam 310 of the laser sensor 300 is not directly rotatable, so a motion trajectory of the robot 100 is rotated instead and it is moved to rotate relative to the laser beam 310, before a virtual laser beam 320 may be generated accordingly. Preferably, the rotation axis is a line passing through P0 and pointing in the direction ($x_{p2}$-$x_{p1}$,$y_{p2}$-$y_{p1}$, k2-k1)$\times$($y_{p1}$-$y_{p2}$,$x_{p2}$-$x_{p1}$,0).

By performing the above-described steps, a laser beam of the laser sensor is initialized, and the spatial position of the virtual laser beam is determined, and then the tool center point of the robot is moved in a preset mode to calibrate the position of the tool center point.

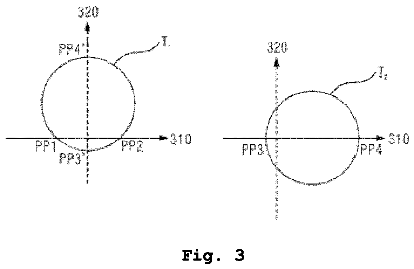

Then, step S2 is performed to, as shown in Fig. 3, control the robot 100 to move by a first motion trajectory T1, wherein the first motion trajectory T1 and the laser beam 310 have a first intersection PP1 and a second intersection PP2, the first motion trajectory T1 is rotated by 90 degrees clockwise to obtain a second motion trajectory T2, and the robot 100 is controlled to move by the second motion trajectory T2, wherein the second motion trajectory T2 and the laser beam 310 have a third intersection PP3 and a fourth intersection PP4.

Optionally, the first motion trajectory T1 may also be rotated by 90 degrees counterclockwise to obtain a second motion trajectory T2, and an objective of the present invention may be achieved by performing relevant actions in step S3 in the opposite direction.

In step S3, the third intersection PP3 and the fourth intersection PP4 are respectively reversely rotated by 90 degrees to obtain a virtual third intersection PP3' and a virtual fourth intersection PP4', a first center point PT1 is obtained on the basis of the first intersection PP1, the second intersection PP2, the virtual third intersection PP3', and the virtual fourth intersection PP4', and after the robot 100 is moved over a first distance $Z_{depth}$ in the Z-axis direction of the base coordinates thereof, steps S2 and S3 continue to be executed iteratively to obtain a second center point PT2, the first center point PT1 and the second center point PT1 determining a calibration line, wherein in order to rotate the calibration line to be parallel to the Z-axis, it is necessary to rotate it by a first angle RX in the X-axis direction and by a second angle RY in the Y-axis direction, respectively, controlling the robot 100 to rotate by the first angle RX relative to the X-axis and by the second angle RY relative to the Y-axis, respectively.

Steps S2 and S3 continue to be executed iteratively to obtain a third center point PT3, and control the robot 100 to move to the third center point PT3 and continue moving along the laser beam 310 in the Z-axis direction close to the laser beam 310, wherein the point shown on the output produced by the laser sensor 300 at which contact between the laser beam 310 and the robot 100 is just avoided is the calibrated tool center point of the robot 100.

Furthermore, it is characterized in that the rotation axis in step S2 and step S3 is the normal vector of the plane formed by the laser beam and the virtual laser beam.

Specifically, as shown in Fig. 3, the robot 100 moves tracing a circle or regular polygon in the space determined by the laser beam 310 and the virtual laser beam 320. The robot 100 performs a rotary motion on the plane to obtain a first motion trajectory T1, and the first motion trajectory T1 and the laser beam 310 have two intersections PP1 and PP2. Then, on the basis of the above-described rotation axis, that is, the line passing through P0 and pointing in the direction $(x_{p2}-x_{p1}, y_{p2}-y_{p1}, k2-k1) \times (y_{p1}-y_{p2}, x_{p2}-x_{p1}, 0)$, the first motion trajectory T1 of the robot 100 is rotated by 90 degrees to plan a second motion trajectory T2 of the robot. The robot 100 moves along the second motion trajectory T2 as planned, and will form additional intersections PP3 and PP4 with the laser beam 310. Then, after the robot moves over a specific distance $Z_{depth}$ in the Z-axis direction of the base coordinates thereof, the two motion trajectories in the above-described steps are repeated, wherein the latter motion trajectory is still the position where the former motion trajectory is rotated by 90 degrees clockwise, so four new intersections, namely, PP5, PP6, PP7 and PP8, will be formed and thus a series of intersections indicating positions on the X-axis, Y-axis, and Z-axis of the base coordinates of the robot 100 are obtained:

$$PPn = \begin{bmatrix} x_{PPn} \\ y_{PPn} \\ z_{PPn} \end{bmatrix}$$

Since PP3, PP4, PP7 and PP8 are the trajectory followed after rotation, they will be rotated back after calibration calculation, which is achieved by the following:

$$PPn' = T_{hom} \cdot PPn$$

where $T_{hom}$ indicates the rotation matrix, PPn' indicates the point after rotation, and PPn indicates the initial intersection. Specifically, PP3 becomes point PP3' after rotating by 90 degrees counterclockwise, PP4 becomes point PP4' after rotating by 90 degrees counterclockwise, PP7 becomes point PP7' after rotating by 90 degrees counterclockwise, and PP8 becomes point PP8' after rotating by 90 degrees counterclockwise. The first center point of PP1, PP2, PP3', and PP4' is PT1, and the second center point of PP5, PP6, PP7', and PP8' is PT2. Specifically, a line may be determined at two points on the basis of PP1 and PP2, and a line may be determined at two points on the basis of PP3' and PP4', wherein the intersection of these two lines is the first center point PT1.

Similarly, a line may be determined at two points on the basis of PP5 and PP6, and a line may be determined at two points on the basis of PP7' and PP8', wherein the intersection of these two lines is the second center point PT2. The tool direction of the robot 100 may be calculated according to the center intersections PT1 and PT2. The center intersections PT1 and PT2 can determine a calibration line, which has an inclination angle with the Z-axis of the robot 100, and, in order to rotate this calibration line to be parallel to the Z-axis, it is necessary to rotate it by the first angle RX in the X-axis direction and by the second angle RY in the Y-axis direction. Therefore, after the robot 100 is rotated by the first angle RX relative to the X-axis and by the second angle RY relative to the Y-axis, respectively, calibration of the initial center point direction of the robot is completed.

Supposing that the difference between the central intersections PT1 and PT on the X-axis is deltaX = $x_{PT1} - x_{PT2}$, and that the difference between the central intersections PT1 and PT on the Y-axis is deltaY = $y_{PT1} - y_{PT2}$, then the first angle RX = atan(deltaY/$Z_{depth}$), and the first angle RY = -atan(deltaX/$Z_{depth}$). The tool center point direction of the robot 100 should be corrected by the first angle RX and the second angle RY. In this case, the tool center point direction of the robot 100 is correct, but it is still at a distance from the calibrated tool center point on the Z-axis.

After direction calibration is performed at the tool center point on the basis of the first angle RX and the second angle RY, the tool direction is parallel to the Z-axis of the base coordinates of the robot. The above-described trajectory is repeated to additionally obtain four points PP9, PP10, PP11, and PP12. The same calculation is repeated to obtain a third intersection PT3, in which case the tool center point of the robot 100 comes into contact with point P0 of the laser beam 310. From the center of PT3 and P1/P2, the X, Y and tool center point may be corrected.

The difference between point P0 and the tool center point of the robot 100 on the X-axis is:

$$Tcp\_delta\_x = x_{PT3} - x_{P0};$$

the difference between point P0 and the tool center point of the robot 100 on the Y-axis is:

$$Tcp\_delta\_y = y_{PT3} - y_{P0};$$

finally, the robot 100 is controlled to move to the third center point PT3 and continue moving along the laser beam 310 in the Z-axis direction close to the laser beam 310, wherein the point shown on the output produced by the laser sensor 300 at which contact between the laser beam 310 and the robot 100 is just avoided is the calibrated tool center point PT4 of the robot 100.

It should be noted that the distance over which the robot 100 moves to the third center point PT3 and continues moving along the laser beam 310 in the Z-axis direction close to the laser beam 310 does not need to be calculated, because the robot, when moving upward, keeps monitoring the output of the laser sensor, and the position where the laser is found to be unblocked is the tool center point of the robot. The distance between the third center point PT3 and the tool center point PT4 on the Z-axis is:

$$\mathtt{Tcp\_delta\_z} = z_{PT3} - z_{PT4}.$$

By the above-described process, the tool center point deviation (X, Y, Z, RX, RY) is calculated. This does not need to be calculated. The tool center point deviation comprises: the difference X between the initial tool center point of the robot 100 and the calibrated tool center point on the X-axis, the difference Y between the initial tool center point of the robot 100 and the calibrated tool center point on the Y-axis, the difference Z between the initial tool center point of the robot 100 and the calibrated tool center point on the Z-axis, the first angle RX, and the second angle RY.

A second aspect of the present invention provides a system for calibrating a tool center point of a robot, which utilizes a laser sensor comprising a laser beam, the system for calibrating a tool center point of a robot comprising: a processor; and a memory coupled to the processor, the memory having an instruction stored therein that, when executed by a processor, causes the electronic device to perform an action comprising: S1, assuming a virtual laser beam for the laser sensor, so that the virtual laser beam is perpendicular to and intersects the laser beam, and the plane formed by the laser beam and the virtual laser beam is parallel to the plane formed by the X-axis, Y-axis, and origin of the base coordinates of the robot; S2, controlling the robot to move by a first motion trajectory, wherein the first motion trajectory and the laser beam have a first intersection and a second intersection, rotating the first motion trajectory by 90 degrees clockwise or counterclockwise to obtain a second motion trajectory, and controlling the robot to move by the second motion trajectory, wherein the second motion trajectory and the laser beam have a third intersection and a fourth intersection; S3, respectively reversely rotating the third intersection and the fourth intersection by 90 degrees to obtain a virtual third intersection and a virtual fourth intersection, obtaining a first center point on the basis of the first intersection, the second intersection, the virtual third intersection, and the virtual fourth intersection, and, after moving the robot over a first distance in the Z-axis direction of the base coordinates thereof, continuing executing actions S2 and S3 iteratively to obtain a second center point, the first center point and the second center point determining a calibration line, wherein in order to rotate the calibration line to be parallel to the Z-axis, it is necessary to rotate it by a first angle in the X-axis direction and by a second angle in the Y-axis direction, respectively, controlling the robot to rotate by the first angle relative to the X-axis and by the second angle relative to the Y-axis, respectively; continuing executing actions S2 and S3 iteratively to obtain a third center point, controlling the robot to move to the third center point and continue moving along the laser beam in the Z-axis direction close to the laser beam, wherein the point shown on the output produced by the laser sensor at which contact between the laser beam and the robot is just avoided is the calibrated tool center point of the robot.

Furthermore, it further comprises the action of calculating the slope of the laser beam relative to the base coordinates of the robot to determine the slope value range of the virtual laser coordinate.

Furthermore, the action S1 further comprises: S11, controlling the robot to follow a motion trajectory so that the motion trajectory and the laser beam have two intersections, selecting a point between the two intersections of the laser beam as the intersection of the laser beam and the virtual laser beam, so as to assume a virtual laser beam for the laser sensor, and, on the basis of the intersection, making the virtual laser beam perpendicular to and intersect the laser beam; S12, by taking the normal vector of the plane formed by the laser beam and the virtual laser beam as the rotation axis, rotating the virtual laser beam until the plane formed by the laser beam and the virtual laser beam is parallel to the plane formed by the X-axis, Y-axis, and origin of the base coordinates of the robot.

Furthermore, the rotation axis in action S2 and action S3 is the normal vector of the plane formed by the laser beam and the virtual laser beam.

Furthermore, a tool center point deviation of a calibrated tool center point of a robot from the initial center point thereof is calculated, wherein the tool center point deviation comprises:

- the difference between the initial tool center point of the robot and the calibrated tool center point on the X-axis;
- the difference between the initial tool center point of the robot and the calibrated tool center point on the Y-axis;
- the difference between the initial tool center point of the robot and the calibrated tool center point on the Z-axis;
- the first angle RX;
- the second angle RY.

A third aspect of the present invention provides a device for calibrating a tool center point of a robot, which utilizes a laser sensor comprising a laser beam, the device for calibrating a tool center point of a robot comprising: a first virtualization apparatus for assuming a virtual laser beam for the laser sensor, so that the virtual laser beam is perpendicular to and intersects the laser beam, and the plane formed by the laser beam and the virtual laser beam is parallel to the plane formed by the X-axis, Y-axis, and origin of the base coordinates of the robot; a control apparatus for controlling the robot to move by a first motion trajectory, wherein the first motion trajectory and the laser beam have a first intersection and a second intersection, rotating the first motion trajectory by 90 degrees clockwise or counterclockwise to obtain a second motion trajectory, and controlling the robot to move by the second motion trajectory, wherein the second motion trajectory and the laser beam have a third intersection and a fourth intersection; a second virtualization apparatus for respectively reversely rotating the third intersection and the fourth intersection by 90 degrees to obtain a virtual third intersection and a virtual fourth intersection, obtaining a first center point on the basis of the first intersection, the second intersection, the virtual third intersection, and the virtual fourth intersection, and, after moving the robot over a first distance in the Z-axis direction of the base coordinates thereof, continuing executing actions S2 and S3 iteratively to obtain a second center point, the first center point and the second center point determining a calibration line, wherein in order to rotate the calibration line to be parallel to the Z-axis, it is necessary to rotate it by a first angle in the X-axis direction and by a second angle in the Y-axis direction, respectively, controlling the robot to rotate by the first angle relative to the X-axis and by the second angle relative to the Y-axis, respectively; the control apparatus and the second virtualization apparatus continue executing the above-described functions iteratively to obtain a third center point, controlling the robot to move to the third center point and continue moving along the laser beam in the Z-axis direction close to the laser beam, wherein the point shown on the output produced by the laser sensor at which contact between the laser beam and the robot is just avoided is the calibrated tool center point of the robot.

A fourth aspect of the present invention provides a computer program product tangibly stored on a computer-readable medium and comprising a computer-executable instruction that, when executed, causes at least one processor to implement the method as described in the first aspect of the present invention.

A fifth aspect of the present invention provides a computer-readable medium having a computer-executable instruction stored thereon that, when executed, causes at least one processor to implement the method as described in the first aspect of the present invention.

With a method for calibrating a tool center point of a robot provided by the present invention, a laser sensor with only one laser beam is utilized to simulate a laser sensor with two laser beams, so the costs are greatly reduced.

While the present invention has been described in detail with the above-mentioned preferred embodiments, it should be understood that the above description should not be construed as limiting the present invention. Various modifications and substitutions to the present invention will become readily apparent after perusal of the above content by those of ordinary skill in the art. Thus, the scope of protection of the present invention should be defined by the attached claims. In addition, no reference signs specified in a claim should be construed as limiting an involved claim; the term "comprising" does not exclude any devices or steps that are not listed in another claim or the description; terms such as "first" and "second" are used to indicate designations, rather than indicating any specific order.

**Claims**

1. A method for calibrating a tool center point of a robot, which utilizes a laser sensor comprising a laser beam, and comprises the following steps:

   51, assuming a virtual laser beam for the laser sensor, so that the virtual laser beam is perpendicular to and intersects the laser beam, and the plane formed by the laser beam and the virtual laser beam is parallel to the plane formed by the X-axis, Y-axis, and origin of the base coordinates of the robot;
   S2, controlling the robot to move by a first motion trajectory, wherein the first motion trajectory and the laser beam have a first intersection and a second intersection, rotating the first motion trajectory by 90 degrees clockwise or counterclockwise to obtain a second motion trajectory, and controlling the robot to move by the second motion trajectory, wherein the second motion trajectory and the laser beam have a third intersection and a fourth intersection;
   S3, respectively reversely rotating the third intersection and the fourth intersection by 90 degrees to obtain a virtual third intersection and a virtual fourth intersection, and obtaining a first center point on the basis of the first intersection, the second intersection, the virtual third intersection, and the virtual fourth intersection,
   after moving the robot over a first distance in the Z-axis direction of the base coordinates thereof, continuing executing steps S2 and S3 iteratively to obtain a second center point, the first center point and the second center point determining a calibration line, wherein in order to rotate the calibration line to be parallel to the Z-axis, it is necessary to rotate it by a first angle in the X-axis direction and by a second angle in the Y-axis direction, respectively, controlling the robot to rotate by the first angle relative to the X-axis and by the second angle relative to the Y-axis, respectively;
   continuing executing steps S2 and S3 iteratively to obtain a third center point, controlling the robot to move to the third center point and continue moving along the laser beam in the Z-axis direction close to the laser beam, wherein the point shown on the output produced by the laser sensor at which contact between the laser beam and the robot is just avoided is the calibrated tool center point of the robot.

2. The method for calibrating a tool center point of a robot as claimed in claim 1, **characterized in that** it further comprises the following step:
calculating the slope of the laser beam relative to the base coordinates of the robot to determine the slope value range of the virtual laser coordinate.

3. The method for calibrating a tool center point of a robot as claimed in claim 1, **characterized in that** step S1 further comprises the following steps:

   S11, controlling the robot to follow a motion trajectory so that the motion trajectory and the laser beam have two intersections, selecting a point between the two intersections of the laser beam as the intersection of the laser beam and the virtual laser beam, so as to assume a virtual laser beam for the laser sensor, and, on the basis of the intersection, making the virtual laser beam perpendicular to and intersect the laser beam;
   S12, by taking the normal vector of the plane formed by the laser beam and the virtual laser beam as the rotation axis, rotating the virtual laser beam until the plane formed by the laser beam and the virtual laser beam is parallel to the plane formed by the X-axis, Y-axis, and origin of the base coordinates of the robot.

4. The method for calibrating a tool center point of a robot as claimed in claim 2, **characterized in that** the rotation axis in step S2 and step S3 is the normal vector of the plane formed by the laser beam and the virtual laser beam.

5. The method for calibrating a tool center point of a robot as claimed in claim 1, wherein a tool center point deviation of a calibrated tool center point of a robot from the initial center point thereof is calculated, **characterized in that** the tool center point deviation comprises:

   - the difference between the initial tool center point of the robot and the calibrated tool center point on the X-axis;
   - the difference between the initial tool center point of the robot and the calibrated tool center point on the Y-axis;
   - the difference between the initial tool center point of the robot and the calibrated tool center point on the Z-axis;
   - the first angle RX;

   - the second angle RY.

6. A system for calibrating a tool center point of a robot, which utilizes a laser sensor comprising a laser beam, and comprises:

   a processor; and
   a memory coupled to the processor, the memory having an instruction stored therein that, when executed by a processor, causes the electronic device to perform an action comprising:

   S1, assuming a virtual laser beam for the laser sensor, so that the virtual laser beam is perpendicular to and intersects the laser beam, and the plane formed by the laser beam and the virtual laser beam is parallel to the plane formed by the X-axis, Y-axis, and origin of the base coordinates of the robot;
   S2, controlling the robot to move by a first motion trajectory, wherein the first motion trajectory and the laser beam have a first intersection and a second intersection, rotating the first motion trajectory by 90 degrees clockwise or counterclockwise to obtain a second motion trajectory, and controlling the robot to move by the second motion trajectory, wherein the second motion trajectory and the laser beam have a third intersection and a fourth intersection;
   S3, respectively reversely rotating the third intersection and the fourth intersection by 90 degrees to obtain a virtual third intersection and a virtual fourth intersection, and obtaining a first center point on the basis of the first intersection, the second intersection, the virtual third intersection, and the virtual fourth intersection,
   after moving the robot over a first distance in the Z-axis direction of the base coordinates thereof, continuing executing actions S2 and S3 iteratively to obtain a second center point, the first center point and the second center point determining a calibration line, wherein in order to rotate the calibration line to be parallel to the Z-axis, it is necessary to rotate it by a first angle in the X-axis direction and by a second angle in the Y-axis direction, respectively, controlling the robot to rotate by the first angle relative to the X-axis and by the second angle relative to the Y-axis, respectively;
   continuing executing actions S2 and S3 iteratively to obtain a third center point, controlling the robot to move to the third center point and continue moving along the laser beam in the Z-axis direction close to the laser beam, wherein the point shown on the output produced by the laser sensor at which contact between the laser beam and the robot is just avoided is the calibrated tool center point of the robot.

7. The system for calibrating a tool center point of a robot as claimed in claim 6, **characterized in that** it further comprises the following action:
calculating the slope of the laser beam relative to the base coordinates of the robot to determine the slope value range of the virtual laser coordinate.

8. The system for calibrating a tool center point of a robot as claimed in claim 6, **characterized in that** the action S1 further comprises:

    S11, controlling the robot to follow a motion trajectory so that the motion trajectory and the laser beam have two intersections, selecting a point between the two intersections of the laser beam as the intersection of the laser beam and the virtual laser beam, so as to assume a virtual laser beam for the laser sensor, and, on the basis of the intersection, making the virtual laser beam perpendicular to and intersect the laser beam;
    S12, by taking the normal vector of the plane formed by the laser beam and the virtual laser beam as the rotation axis, rotating the virtual laser beam until the plane formed by the laser beam and the virtual laser beam is parallel to the plane formed by the X-axis, Y-axis, and origin of the base coordinates of the robot.

9. The system for calibrating a tool center point of a robot as claimed in claim 7, **characterized in that** the rotation axis in action S2 and action S3 is the normal vector of the plane formed by the laser beam and the virtual laser beam.

10. The system for calibrating a tool center point of a robot as claimed in claim 6, wherein a tool center point deviation of a calibrated tool center point of a robot from the initial center point thereof is calculated, **characterized in that** the tool center point deviation comprises:

    - the difference between the initial tool center point of the robot and the calibrated tool center point on the X-axis;
    - the difference between the initial tool center point of the robot and the calibrated tool center point on the Y-axis;
    - the difference between the initial tool center point of the robot and the calibrated tool center point on the Z-axis;
    - the first angle RX;
    - the second angle RY.

11. A device for calibrating a tool center point of a robot, which utilizes a laser sensor comprising a laser beam, wherein the device for calibrating a tool center point of a robot comprises:

    a first virtualization apparatus for assuming a virtual laser beam for the laser sensor, so that the virtual laser beam is perpendicular to and intersects the laser beam, and the plane formed by the laser beam and the virtual laser beam is parallel to the plane formed by the X-axis, Y-axis, and origin of the base coordinates of the robot;
    a control apparatus for controlling the robot to move by a first motion trajectory, wherein the first motion trajectory and the laser beam have a first intersection and a second intersection, rotating the first motion trajectory by 90 degrees clockwise or counterclockwise to obtain a second motion trajectory, and controlling the robot to move by the second motion trajectory, wherein the second motion trajectory and the laser beam have a third intersection and a fourth intersection;
    a second virtualization apparatus for respectively reversely rotating the third intersection and the fourth intersection by 90 degrees to obtain a virtual third intersection and a virtual fourth intersection, obtaining a first center point on the basis of the first intersection, the second intersection, the virtual third intersection, and the virtual fourth intersection, and, after moving the robot over a first distance in the Z-axis direction of the base coordinates thereof, continuing executing actions S2 and S3 iteratively to obtain a second center point, the first center point and the second center point determining a calibration line, wherein in order to rotate the calibration line to be parallel to the Z-axis, it is necessary to rotate it by a first angle in the X-axis direction and by a second angle in the Y-axis direction, respectively, controlling the robot to rotate by the first angle relative to the X-axis and by the second angle relative to the Y-axis, respectively; the control apparatus and the second virtualization apparatus continue executing the above-described functions iteratively to obtain a third center point, controlling the robot to move to the third center point and continue moving along the laser beam in the Z-axis direction close to the laser beam, wherein the point shown on the output produced by the laser sensor at which contact between the laser beam and the robot is just avoided is the calibrated tool center point of the robot.

12. A computer program product tangibly stored on a computer-readable medium and comprising a computer-executable instruction that, when executed, causes at least one processor to implement the method as claimed in any one of claims 1 to 5.

13. A computer-readable medium having a computer-executable instruction stored thereon that, when executed, causes at least one processor to implement the method as claimed in any one of claims 1 to 5.

**Fig. 1**

Fig. 2A

Fig. 2B

**Fig. 3**

## INTERNATIONAL SEARCH REPORT

| International application No. |
|---|
| **PCT/CN2020/093045** |

**A. CLASSIFICATION OF SUBJECT MATTER**

B25J 9/16(2006.01)i;  B25J 19/00(2006.01)i

According to International Patent Classification (IPC) or to both national classification and IPC

**B. FIELDS SEARCHED**

Minimum documentation searched (classification system followed by classification symbols)

B25J 9, B25J 19, G01B 21, G01B 11

Documentation searched other than minimum documentation to the extent that such documents are included in the fields searched

Electronic data base consulted during the international search (name of data base and, where practicable, search terms used)

EPTXT; USTXT; VEN; WOTXT; CNABS; CNTXT; CNKI: 工具中心点, 零位, 零点, 定位, 校准, 校正, 矫正, 标定, 修正, 激光, 光束, 模拟, 虚拟, 拟合, 假设, 假定, 交点, 相交, 交叉, 垂直, 移动, 运动, 轨迹, 路径, 路线, 旋转, 转动, 机器人, 机械手, 机械臂, 机械手臂, TCP, tool center point, zero position, zero point, calibrat+, correct+, adjust+, align+, laser, simulat+, virtual+, intersect+, cross+, perpendicular+, vertical+, track, path, route, robot, manipulator+, mechanical arm

**C. DOCUMENTS CONSIDERED TO BE RELEVANT**

| Category* | Citation of document, with indication, where appropriate, of the relevant passages | Relevant to claim No. |
|---|---|---|
| A | CN 110861091 A (WUHAN INSTITUTE OF TECHNOLOGY) 06 March 2020 (2020-03-06) description, paragraphs [0020]-[0067], and figures 1-5 | 1-13 |
| A | CN 105945948 A (NANJING INSTITUTE OF TECHNOLOGY) 21 September 2016 (2016-09-21) entire document | 1-13 |
| A | CN 111152216 A (FUZHOU GUOHUA INTELLIGENT TECHNOLOGY CO., LTD.) 15 May 2020 (2020-05-15) entire document | 1-13 |
| A | CN 103101060 A (HONGFUJIN PRECISION INDUSTRY (SHENZHEN) CO., LTD. et al.) 15 May 2013 (2013-05-15) entire document | 1-13 |
| A | CN 103442858 A (TROMPETER MATTHEW E) 11 December 2013 (2013-12-11) entire document | 1-13 |
| A | US 2015158180 A1 (TROMPETER MATTHEW E) 11 June 2015 (2015-06-11) entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 February 2021** | **03 March 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/093045**

| Patent document cited in search report | | | Publication date (day/month/year) | Patent family member(s) | | | Publication date (day/month/year) |
|---|---|---|---|---|---|---|---|
| CN | 110861091 | A | 06 March 2020 | None | | | |
| CN | 105945948 | A | 21 September 2016 | CN | 105945948 | B | 23 March 2018 |
| CN | 111152216 | A | 15 May 2020 | None | | | |
| CN | 103101060 | A | 15 May 2013 | CN | 103101060 | B | 01 July 2015 |
| | | | | US | 9002516 | B2 | 07 April 2015 |
| | | | | US | 2013123982 | A1 | 16 May 2013 |
| CN | 103442858 | A | 11 December 2013 | WO | 2012125209 | A3 | 27 December 2012 |
| | | | | EP | 2686143 | A2 | 22 January 2014 |
| | | | | CA | 2828856 | A1 | 20 September 2012 |
| | | | | US | 2012283874 | A1 | 08 November 2012 |
| | | | | US | 9061421 | B2 | 23 June 2015 |
| | | | | MX | 2013010355 | A | 14 April 2014 |
| | | | | KR | 20130141664 | A | 26 December 2013 |
| | | | | AU | 2012229542 | A1 | 03 October 2013 |
| | | | | US | 2012265341 | A1 | 18 October 2012 |
| | | | | US | 9266241 | B2 | 23 February 2016 |
| | | | | JP | 2014508050 | A | 03 April 2014 |
| | | | | BR | 112013023413 | A2 | 01 March 2017 |
| | | | | WO | 2012125209 | A2 | 20 September 2012 |
| | | | | US | 9669546 | B2 | 06 June 2017 |
| | | | | US | 2015306769 | A1 | 29 October 2015 |
| | | | | US | 2016016317 | A1 | 21 January 2016 |
| US | 2015158180 | A1 | 11 June 2015 | US | 9114534 | B2 | 25 August 2015 |

Form PCT/ISA/210 (patent family annex) (January 2015)